# EUROPÄISCHE PATENTSCHRIFT

(11) **EP 0 551 489 B1**
(45) Veröffentlichungstag und Bekanntmachung des Hinweises auf die Patenterteilung: **17.01.1996**
(21) Anmeldenummer: 92916879.7
(22) Anmeldetag: 12.08.1992
(51) Int. Cl.: F16D 65/092, F16D 69/04

(54) **REIBBLOCK FÜR SCHEIBENBREMSEN MIT PLATTENFÖRMIGEM RÜCKENKÖRPER**
FRICTION PAD FOR DISC BRAKES WITH PLATE-SHAPED BACKING
BLOC DE FRICTION POUR FREINS A DISQUE AVEC DOS EN FORME DE DISQUE

(30) Priorität: 14.08.1991 DE 4126841
(43) Veröffentlichungstag der Anmeldung: 21.07.1993
(73) Patentinhaber: Stahl, Otto Kurt, A-8403 Lebring (AT)
(72) Erfinder: Stahl, Otto Kurt, A-8403 Lebring (AT)
(74) Vertreter: Langmaack, Jürgen, Dipl.-Ing.
(86) Internationale Anmeldenummer: EP9201842
(87) Internationale Veröffentlichungsnummer: WO9304295

(56) Entgegenhaltungen:
- EP-A- 0 102 147
- EP-A- 0 336 465
- DE-A- 3 030 003
- DE-B- 2 655 105
- DE-C- 2 935 943
- DE-C- 3 124 527

## Beschreibung

Die Erfindung betrifft einen Reibblock für Scheibenbremsen, mit einem plattenförmigen Rückenkörper, der durch ein Formteil aus einem Metall, insbesondere einem Leichtmetall gebildet wird, das auf einer Seite am Rand mit einem wenigstens über einen Teilbereich umlaufenden Steg zur Aufnahme eines Reibmaterialblockes versehen ist.

Für Scheibenbremsen an Automobilen bestehen die Reibblöcke aus einer aus Stahlblech von etwa 3 bis 4 mm Dicke ausgestanzten Trägerplatte, auf die das Reibmaterial unter Verwendung eines Haftmittels blockförmig aufgepreßt ist. Die beim Bremsvorgang zwischen Reibbelag und Bremsscheibe wirksam werdende hohe thermische Belastung kann aufgrund der über die Stahlplatte erfolgenden Wärmeabfuhr je nach Zusammensetzung des verwendeten Reibmaterials bei den unterschiedlichsten Lastzuständen zu ungünstigen Einflüssen auf das Bremsverhalten führen. Hinzu kommt noch, daß das Reibmaterial einerseits und die Stahlträgerplatte unterschiedliche Wärmeausdehnungskoeffizienten besitzen, so daß hier bei langgestreckten Reibbelägen Verformungen des Reibbelages unter Temperatureinfluß auftreten können, die zu einem Abheben des Reibblocks von der Bremsscheibe in den Endbereich führen können, die nicht direkt durch den Kolben des Bremszylinders belastet sind. Um die thermischen Nachteile zu beheben, hat man nun versucht, auf die Stahlträgerplatte zunächst eine dünne Schicht eines mit Asbestfasern versetzten Reibmaterials aufzubringen, auf das dann das asbestfreie Reibmaterial aufgepreßt wurde. Hierdurch konnte zwar eine gewisse thermische Isolierung der Stahlträgerplatte gegenüber dem Reibmaterial bewirkt werden. Die Verformungsprobleme werden hierdurch jedoch nicht beseitigt. Ein weiterer Nachteil dieser Lösung besteht vor allem darin, daß bei der Herstellung immer noch mit Asbest gearbeitet werden mußte. Zwischenlagen aus Kunststoffen oder ähnlichen Materialien anstelle einer mit hohem Asbestfaseranteil versetzten Reibmaterialschicht konnten nicht zum Erfolg führen, da diese Materialien sich bei den hohen Temperaturen, die bis zu 800°C erreichen können, keine ausreichende Hitzebeständigkeit aufweisen.

Aus der DE-PS 27 34 585 und DE-PS 29 35 943 ist es nun bekannt, Reibblöcke herzustellen, bei denen anstelle einer Stahlträgerplatte eine Trägerplatte aus einem Hartkeramikformteil eingesetzt wird, die mit einer Metallummantelung, insbesondere einer Druckgußummantelung, versehen ist. Diese Trägerplatten sind unabhängig von der jeweiligen Temperatur absolut steif, so daß der durch den Kolben des Bremszylinders bewirkte Anpreßdruck über die gesamte Fläche des Reibblockes auf die Bremsscheibe ohne Verformung, insbesondere ohne thermische Verformung, übertragen wird und somit immer eine ebenflächige Anlage des Reibmaterials an der Bremsscheibe und damit ein gleichmäßiger Abrieb gewährleistet ist. Derartige Reibblöcke mit einer Trägerplatte aus Hartkeramik sind für thermisch hoch belastete Bremsen, insbesondere Automobilbremsen vorteilhaft. Für Einsatzfälle, bei denen nicht so hohe Bremsleistungen gefordert werden, sind derartige Keramikträgerplatten zwar vorteilhaft, jedoch verhältnismäßig kostspielig.

Aus der EP-A-0 336 465 ist ein Reibblock für Scheibenbremsen bekannt, mit einer Basisplatte, die auch aus Metall hergestellt sein kann, und die auf ihrer der zugehörigen Bremsscheibe zugekehrten Seite mit einer Vielzahl von zylindrischen Aufnahmen versehen ist, in die entsprechend zylindrisch geformte Reibklötze eingesetzt sind. Bei einer derartigen aus Metall hergestellten Basisplatte ist eine gleichmäßige Anlage der Reibkörper an der Bremsscheibe schon deshalb nicht gewährleistet, weil die Steifigkeit ausschließlich über die Basisplatte bereitgestellt werden muß. Die getrennt eingesetzten Reibkörper tragen hierbei nicht zur Versteifung bei. Hinzu kommt noch, daß aufgrund der unterschiedlichen Temperaturdehnungen derartiger großformatiger Reibblöcke sich zwangsläufig Verwerfungen der Basisplatte ergeben, so daß letztlich die Reibkörper ungleichmäßig abgetragen werden und damit die Standzeit eines derartigen Reibblockes reduziert ist.

Der Erfindung liegt nun die Aufgabe zugrunde, für derartige Reibblöcke einen plattenförmigen Rückenkörper zu schaffen, der ein möglichst geringes Gewicht aufweist, dabei aber verformungssteif ist.

Diese Aufgabe wird erfindungsgemäß dadurch gelöst, daß ein wenigstens in einer Achsrichtung biegesteifes Versteifungselement wenigstens teilweise in das Formteil eingegossen ist. Der Begriff "Achsrichtung" bezieht sich auf ein in der Ebene des Reibblockes liegendes Achsenkreuz, dessen eine Achse in Richtung des Radius der zugehörigen Bremsscheibe ausgerichtet ist, wohingegen die zweite Achse in Umfangsrichtung der zugehörigen Bremsscheibe weist bzw. tangential zu einer Umfangslinie der zugehörigen Bremsscheibe ausgerichtet ist. Hierdurch ist gewährleistet, daß trotz der Verwendung einer dünnen Rückenplatte oder einer Rückenplatte aus Leichtmetall die beim Betrieb der Bremse über den Rückenkörper eingeleiteten Anpreßkräfte praktisch ohne Verformung übertragen werden, so daß der Reibmaterialblock mit seiner ganzen Reibfläche an der zugeordneten Reibfläche der Bremsscheibe anliegt und gleichmäßig abgenutzt wird. Bei kleinformatigen Reibblöcken, wie sie beispielsweise für Personenkraftwagenbremsen verwendet werden, reicht es hierbei aus, wenn das Versteifungselement in der in Umfangsrichtung der Bremsscheibe weisenden Achse biegesteif ist. Uberraschend hat sich gezeigt, daß insbesondere bei einem in einen Rückenkörper aus Leichtmetall eingegossenen Versteifungselement trotz der Verwendung von Leichtmetallen für den Rückenkörper durch das Versteifungselement der Reibmaterialblock gleichmäßig abgetragen wird und auch zum Ende seine Lebensdauer eine ebene Reibfläche aufweist. Hierdurch ist während der gesamten Lebensdauer die Gewähr gegeben, daß auch die Reibfläche der Bremsscheibe ihre Planizität behält. Bevorzugt ist hierbei vorgesehen, daß das Versteifungselement sich nahezu über die Fläche des Formteils erstreckt.

In bevorzugter Ausgestaltung der Erfindung ist vorgesehen, daß das Versteifungselement aus einem Metall mit höherer Biegefestigkeit als das Metall des Formteils besteht. Hierbei wird ein Stahl, insbesondere eine nichtrostender Stahl bevorzugt. Das Versteifungselement kann eine Gitterstruktur aufweisen.

Um die Dicke des plattenförmigen Rückenkörper insgesamt möglichst gering halten zu können, ist in einer Ausgestaltung der Erfindung vorgesehen, daß das Versteifungselement durch eine geprägte Platte gebildet wird. Eine derartige Prägung in Form von Rippen oder Sicken, die zur Aussteifung der Fläche in den Hauptachsen der Biegebelastung verlaufen können erlaubt es, hierzu ein verhältnismäßig dünnes Blech zu verwenden, dessen Dicke beispielsweise weniger als die Hälfte der gesamten Dicke des Rückenkörpers in diesem Bereich beträgt. Bei einer Gesamtdicke des Rückenkörpers von beispielsweise 5 mm reicht es aus, ein Plattenmaterial von nur 1 mm für die zu prägende Platte vorzusehen. Bevorzugte weist die geprägte Platte eine Wellenstruktur auf. Dies hat den Vorteil daß eine derartige Platte in die Gießform, beispielsweise eine Druckgußform eingelegt werden und vollständig dicht umgossen werden kann.

In einer anderen Ausgestaltung der Erfindung ist vorgesehen, daß die vorzugsweise wellenförmige Platte im Randbereich quer zu den Kammlinien der Wellenstruktur verlaufende Versteifungsprofile aufweist. Bei einer bevorzugten Ausrichtung der Kammlinien tangential zu den Umfangslinien der zugehörigen Bremsscheibe bieten die jeweils dem Einlaufbereich und dem Auslaufbereich des Reibblockes zugeordneten Versteifungsprofile die notwendige Aussteifung in Querrichtung, da diese Bereiche nicht mehr durch die am Rückenkörper anliegenden Bremskolben abgedeckt werden. Ein weiterer Vorteil besteht durch die querverlaufenden Versteifungsprofile darin, daß bei entsprechender Anordnung in Teilbereichen das die in Form einer Wellenstruktur geprägte Blechplatte füllende Leichtmetall in gewissen Bereichen Unterbrechungen aufweist, so daß hier eine Entkoppelung gegeben ist, durch die thermische Verbiegungen, die infolge großer Temperaturunterschiede während des Betriebes auftreten können, vermieden werden.

In weiterer Ausgestaltung der Erfindung ist vorgesehen, daß die Oberfläche des Versteifungselemente aufgerauht ist. Hierdurch ergibt sich beim Umgießen, insbesondere beim Umgießen in Druckgußtechnik, eine einwandfreie Verbindung zwischen dem Leichtmetall und dem Metall des Versteifungselementes, die ausreicht, um den Belastungen infolge der unterschiedlichen Längenausdehnungskoeffizienten der beiden verschiedenen Metalle auszugleichen, die infolge der beim Bremsvorgang auftretenden Erwärmung wirksam werden.

In einer bevorzugten Ausgestaltung der Erfindung ist vorgesehen, daß die Oberfläche des Versteifungselementes mit einer metallischen, vorzugsweise aufgespritzten Beschichtung aus einer Aluminiumlegierung, insbesondere einer Aluminium-Nickel-Legierung versehen ist. Dies hat den Vorteil, daß mögliche Korrosionen zwischen dem Metall des Versteifungselementes, beispielsweise rostfreiem Stahl und dem das Versteifungselement umhüllenden Leichtmetall vermieden werden. Ein weiterer Vorteil besteht darin, daß durch das Aufspritzen der Beschichtung zugleich die erforderliche Rauhigkeit der Oberfläche des Versteifungselementes gegeben ist.

In weiterer Ausgestaltung der Erfindung ist vorgesehen, daß in einem dem Zentralbereich der Reibfläche zugeordneten Bereich des Rückenkörpers eine senkrecht zur Reibfläche geringfügig nachgiebige Zone vorgesehen ist. Diese Ausgestaltung ist insbesondere für Reibmaterialblöcke aus CFC-Material (Carbon- Faser-Compound-Material) von besonderem Vorteil. Überraschenderweise hat sich gezeigt, daß durch die Anordnung einer derartigen nachgiebigen Zone die beim Bremsvorgang unter der Hitzeeinwirkung auftretende geringfügige Aufwölbung des Reibmaterialblockes ausgeglichen wird, so daß die Planizität der Reibfläche des Reibblockes und entsprechend der Reibfläche der Bremsscheibe während der gesamten Lebensdauer des Reibblockes gewährleistet ist. Dies erlaubt es, nach Verschleiß eines Reibblockes ohne die Bremsscheibe nacharbeiten zu müssen, bzw. den neu eingesetzten Reibblock erst einfahren zu müssen, die Bremse sofort wieder voll in Betrieb nehmen zu können. Zeckmäßig ist es hierbei, wenn die Nachgiebigkeit des Zentralbereichs durch wenigstens eine Ausnehmung im plattenförmigen Rückenkörper bewirkt wird. Die Ausnehmung kann beispielsweise durch eine Ausfräsung bzw. Anfräsung in der Fläche des plattenförmigen Rückenkörpers vorgenommen werden, so daß hier eine geringfügige Verformbarkeit gegeben ist. Bei gegossenen plattenförmigen Rückenkörpern kann die Ausnehmung beim Herstellungsprozeß direkt eingeformt werden. Bei plattenförmigen Rückenkörpern mit Versteifungselement wird die Nachgiebigkeit des Zentralbereichs durch eine entsprechende Durchbrechung im Versteifungselement vorgesehen werden.

Die Erfindung wird anhand schematischer Zeichnungen näher erläutert. Es zeigen:
- Fig. 1: eine Aufsicht auf die Reibfläche eines Reibblockes für Scheibenbremsen,
- Fig. 2: einen Schnitt gem. der Linie II-II in Fig. 1,
- Fig. 3: einen Schnitt gem. der Linie III-III in Fig. 1,
- Fig. 4: das in Fig. 3 gekennzeichnete Detail X in größerem Maßstab,
- Fig. 5: im Schnitt eine erste Ausführungsform für einen Reibblock mit nachgiebigem Zentralbereich,
- Fig. 6 + 7: die Rückenfläche eines aus Leichtmetall gegeossenen Formteils,
- Fig. 8: einen Schnitt entsprechend Fig. 3 in einer Ausführungsform mit nachgiebigem Zentralbereich.

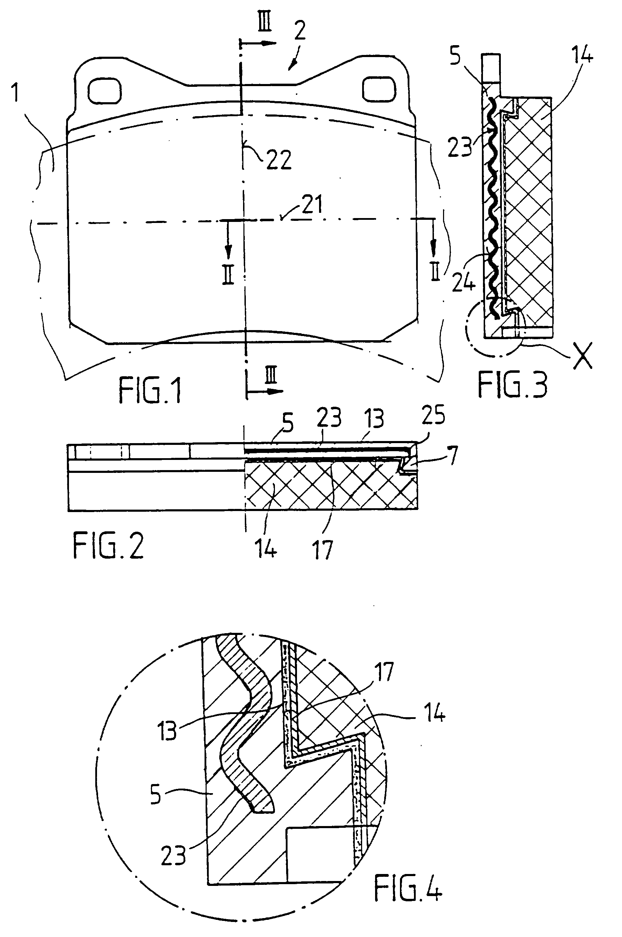

Der in Fig. 1 dargestellte Reibblock 2 für eine Kraftfahrzeugscheibenbremse zeigt diesen in seiner Zuordnung zu der Bremsscheibe 1, die hier nur strichpunktiert angedeutet ist. Damit ergeben sich für den Reibblock 2 zwei Hauptachsrichtungen, nämlich einmal die Achsrichtung 21, die, bezogen auf die Bremsscheibe 1, tangential zu einer Umfangslinie verläuft und die Achsrichtung 22, die in Richtung eines Radius der Bremsscheibe 1 verläuft. Wie die nur als Teilschnitt ausgeführte Darstellung in Fig. 2 zeigt, besteht der Reibblock 2 im wesentlichen aus einem Reibmaterialblock 14, der mit einem Formteil 5 verbunden ist, das in Druckgußtechnik aus einer Aluminium-Druckgußlegierung hergestellt ist. Das Formteil 5 ist am Rand auf seiner dem Reibmaterialblock zugekehrten Fläche mit einem umlaufenden Steg 7 versehen, so daß der Reibmaterialblock 14 formschlüssig vom Formteil 5 gehalten ist.

Auf seiner dem Reibmaterialblock 14 zugekehrten Fläche ist das Formteil 5 mit einer dünnen im Plasmaspritzverfahren aufgebrachten Keramikschicht 13 versehen, die ihrerseits mit einer dünnen, ebenfalls aufgespritzten metallischen Beschichtung 17, beispielsweise aus Aluminium abgedeckt ist, auf die dann das Reibmaterial aufgepreßt wird.

In das Formteil 5 ist nun ein Versteifungselement 23 eingegossen, das bei dem dargestellten Ausführungsbeispiel aus einem etwa 1 mm dünnen Blech aus rostfreiem Stahl hergestellt ist. Dieses Versteifungselement ist nun durch einen Prägevorgang, wie aus Fig. 3 ersichtlich, mit einer Wellenstruktur versehen, wobei die Kammlinie 24 der Wellen sich in Richtung der Achse 21 erstreckt, so daß das Versteifungselement in Richtung dieser Achse biegesteif ist.

Der Aufbau des Rückenkörpers ist in Fig. 4 in einer vergrößerten Detaildarstellung wiedergegeben und in Verbindung mit den Bezugszeichen ohne weiteres verständlich.

In einer Abwandlung kann nun vorgesehen werden, daß jeweils im Randbereich, und zwar an den parallel zur Achse 22 verlaufenden Rändern quer zu den Kammlinien der Wellenstruktur verlaufende Versteifungsprofile 25 angeordnet sind. Wie in Fig. 2 dargestellt, kann ein derartiges Versteifungsprofil durch eine Abkantung oder auch durch eine quer zur Achsrichtung 22 verlaufende, die Wellenstruktur randseitig begrenzende Sicke gebildet werden. Bei dem dargestellten Beispiel in Fig. 1 bis 4 ist der Reibmaterialblock 14 formschlüssig mit dem Formteil 5 verbunden. Bei sogenanntem organisch gebundenem Reibmaterial wird dieses auf das Formteil 5 aufgepreßt. Bei sogenannten CFC-Material (Carbon-Faser-Compound) kann wegen der hohen thermischen Stabilität des Materials der Reibmaterialblock 14 zusammen mit dem Versteifungselement 23 umgossen werden, beispielsweise im Druckgußverfahren mit einem Leichtmetall, d. h. einer Aluminium-Legierung.

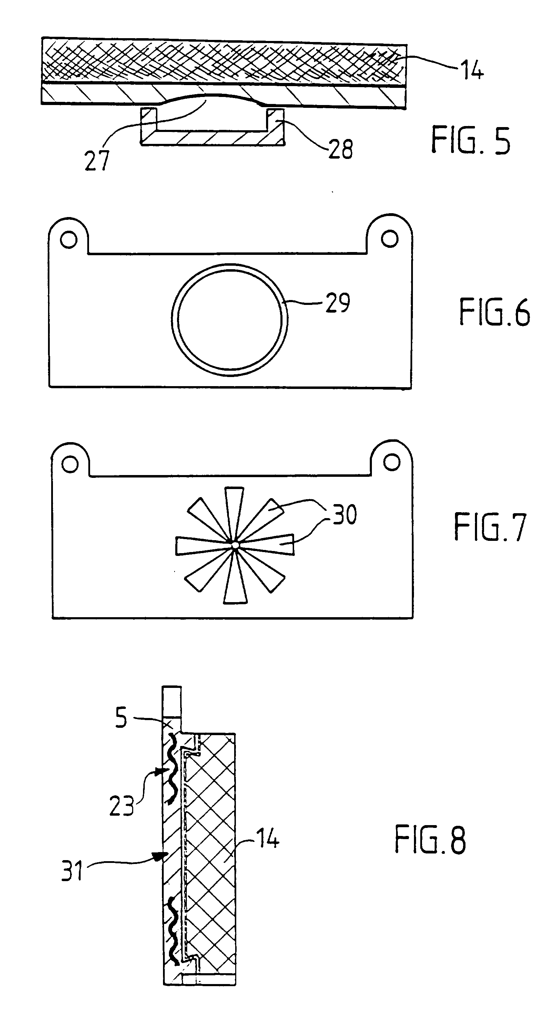

Bei dem in Fig. 5 dargestellten Reibblock ist auf einen plattenförmigen Rückenkörper 26, beispielsweise aus Stahlblech, ein Reibmaterialblock 14 aufgeklebt. Um hier im Zentralbereich des Reibmaterialblockes 14 eine gewisse Nachgiebigkeit senkrecht zur Fläche des Reibmaterialblockes zu schaffen, ist der Rückenkörper 26 auf seiner Rückseite mit einer beispielsweise kreisförmigen Ausnehmung 27 versehen, so daß hier die Trägerplatte ein geringes Maß durchgebogen werden kann. Der Durchmesser der Ausnehmung 27 ist etwas geringer als der Innendurchmesser des angedeuteten Druckkolbens.

Fig. 6 zeigt einen aus Leichtmetall gegossenen Rückenkörper und zwar die Rückenfläche, bei dem die nachgiebige Zone des Zentralbereichs durch eine kreisförmige Rille 29 in der Rückenfläche geschaffen ist.

Fig. 7 zeigt einen aus Leichtmetall gegossenen Rückenkörper, bei dem die nachgiebige Zone durch mehrere sternförmig ausgerichtete Vertiefungen 30 im Rückenkörper bewirkt wird.

Fig. 8 zeigt einen Schnitt entsprechend Fig. 3 für das Ausführungsbeispiel gem. Fig. 1, bei dem die Nachgiebigkeit des Zentralbereichs durch eine Ausstanzung 31 im Versteifungselement 23 bewirkt ist, wobei diese Ausstanzung 31 auf der Rückenfläche des Formteils 5 eine Ausnehmung in einer der in Fig. 5, 6 oder 7 dargestellten Ausführungsformen zugeordnet sein kann.

In allen Fällen kann statt entsprechend nachgiebiger Zonen im Formteil 5 auch der Reibmaterialblock 14 auf seiner der Bremsscheibe zugekehrten Seite mit einer vergleichbaren Ausnehmung versehen sein, die jedoch dann in der Tiefe so bemessen sein muß, daß sie bis auf die vorgesehene Mindestdicke des Reibmaterialblockes in das Reibmaterial eingeformt ist. In allen Fällen wird der nachgiebig zu gestaltende Zentralbereich durch die vom Druckkolben 28 überdeckte Fläche definiert.

## Patentansprüche

1. Reibblock für Scheibenbremsen mit einem Rückenkörper, der durch ein Formteil (5) aus einem Metall, insbesondere einem Leichtmetall gebildet wird, das auf einer Seite am Rand mit einem wenigstens über Teilbereiche umlaufenden Steg (7) zur Aufnahme eines Reibmaterialblockes (14) versehen ist, **dadurch gekennzeichnet**,
daß ein wenigstens in einer Achsrichtung (21, 22) biegesteifes Versteifungselement (23) wenigstens teilweise in das Formteil (5) eingegossen ist.

2. Reibblock nach Anspruch 1, dadurch gekennzeichnet, daß das Versteifungselement (23) sich nahezu über die Fläche des Formteils (5) erstreckt.

3. Reibblock nach Anspruch 1 bis 2, dadurch gekennzeichnet, daß das Versteifungselement (23) aus einem Metall mit höherer Biegefestigkeit als das Metall des Formteils besteht.

4. Reibblock nach einem der Ansprüche 1 bis 3, dadurch gekennzeichnet, daß das Versteifungselement (23) aus einem Stahl, vorzugsweise einem nichtrostenden Stahl, besteht.

5. Reibblock nach einem der Ansprüche 1 bis 4, dadurch gekennzeichnet, daß das Versteifungselement (23) durch eine geprägte Platte gebildet wird.

6. Reibblock nach einem der Ansprüche 1 bis 5, dadurch gekennzeichnet, daß die das Versteifungselement (23) bildende Platte eine Wellenstruktur aufweist.

7. Reibblock nach einem der Ansprüche 1 bis 6, dadurch gekennzeichnet, daß die Kammlinien (24) der Wellenstruktur, bezogen auf die zugehörige Bremsscheibe (1), sich im wesentlichen in deren Durchlaufrichtung erstrecken.

8. Reibblock nach einem der Ansprüche 1 bis 7, dadurch gekennzeichnet, daß die vorzugsweise wellenförmige Platte im Randbereich quer zu den Kammlinien (24) der Wellenstruktur verlaufende Versteifungsprofile (25) aufweist.

9. Reibblock nach einem der Ansprüche 1 bis 8, dadurch gekennzeichnet, daß die Oberfläche des Versteifungselementes (23) aufgerauht ist.

10. Reibblock nach einem der Ansprüche 1 bis 9, dadurch gekennzeichnet, daß die Oberfläche des Versteifungselementes (23) mit einer metallischen, vorzugsweise aufgespritzten Beschichtung aus einer Aluminiumlegierung versehen ist.

11. Reibblock nach einem der Ansprüche 1 bis 10, dadurch gekennzeichnet, daß im Zentralbereich der Reibfläche eine senkrecht zur Reibfläche geringfügig nachgiebige Zone vorgesehen ist.

12. Reibblock nach Anspruch 10, dadurch gekennzeichnet, daß die Nachgiebigkeit des Zentralbereichs durch wenigstens eine Ausnehmung (27; 28; 29) im plattenförmigen Rückenkörper (5) bewirkt wird.

13. Reibblock nach Anspruch 10 oder 11, dadurch gekennzeichnet, daß das biegesteife Versteifungselement (23) im Bereich des nachgiebigen Zentralbereichs durchbrochen ist.

## Claims

1. Friction pad for disk brakes having a back member consisting of a shaped part (5) made of metal, in particular light metal, being provided on one side with a web (7) which is circumambient at least over partial regions for receiving a friction material block (14), characterized in that a stiffening member (23) being bending resistant at least in direction of one of its axes (21, 22) is cast-in at least partially into the shaped part (5).

2. Friction pad according to claim 1, characterized in that the stiffening member (23) extends over nearly the whole surface of the shaped part (5).

3. Friction pad according to one of the preceding claims, characterized in that the stiffening member (23) is made of a metal having more bending resistance than the metal of the shaped part (5).

4. Friction pad according to one of the preceding claims, characterized in that the stiffening member (23) is made of steel, preferably made of stainless steel.

5. Friction pad according to one of the preceding claims, characterized in that the stiffening member (23) is a stamped plate.

6. Friction pad according to one of the preceding claims, characterized in that the plate constituting the stiffening member (23) has a wave structure.

7. Friction pad according to one of the preceding claims, characterized in that the crest lines (24) of the wave structure extend with respect to the accessory brake disc (1) substantially in passing direction of said brake disc (1).

8. Friction pad according to one of the preceding claims, characterized in that the preferably wave-like plate in its edge regions is provided with stiffening profiles (25) which extend transverse to the crest lines (24) of the wave structure.

9. Friction pad according to one of the preceding claims, characterized in that the surface of the stiffening member (23) is roughened.

10. Friction pad according to one of the preceding claims, characterized in that the surface of the stiffening member (23) is provided with a metallic coating of aluminium alloy which is preferably sprayed on.

11. Friction pad according to one of the preceding claims, characterized in that the central region of the friction surface is provided with a zone being slightly flexible perpendicular to the friction surface.

12. Friction pad according to claim 10, characterized in that in the flexibility of the central regions is achieved by at least one recess (27; 28; 29) in the plate shaped back member (5).

13. Friction pad according to claim 10 or 11, characterized in that in the bending resistant stiffening member (23) is worked out an opening covered by the area of the flexible central region.

## Revendications

1. Plaque de friction pour un frein à disque avec un élément de dos constitué par une pièce moulée (5), constituée en métal, particulierèment en métal léger, la pièce moulée étant pourvue sur le bord d'une face nervure (7) périphérique s'étendant au moins sur des zones partielles pour recevoir une plaque de matériau de friction (14), caracterisée par le fait qu'un élément raidisseur étant rigide en direction au moins d'une axe (21, 22) scellé dans la piece moulée au moins partiellement.

2. Plaque de friction selon la revendication 1, caracterisée par le fait que l'élément raidisseur (23) s'étend presque sur la surface de la pièce moulée (5).

3. Plaque de friction selon la revendication 1 ou 2, caracterisée par le fait que l'élément raidisseur (23) est composé d'un métal étant plus rigide que le métal de la pièce moulée (5).

4. Plaque de friction selon l'une des revendications 1 à 3, caracterisée par le fait que l'élément raidisseur (23) est en acier, de préferénce en acier inoxydable.

5. Plaque de friction selon l'une des revendications 1 à 4, caracterisée par le fait que l'élément raidisseur (23) est constitué par une plaque matricée.

6. Plaque de friction selon l'une des revendacations 1 à 5, caracterisée par le fait que la plaque constituant l'élément raidisseur (23) présente une structure ondulée.

7. Plaque de friction selon l'une des revendications 1 à 7, caracterisée par le fait que les crêtes (24) d'ondes par rapport à un disque de frein (1) associé s'étendent essentiellement en sens passant.

8. Plaque de friction selon l'une des revendications 1 à 7, caracterisée par le fait que la plaque qui est de préférence ondulée et munie sur la région de bord des profils de renforcement (25) s'étendant essentiellement en travers par rapport aux crêtes (24) d'ondes.

9. Plaque de friction selon l'une des revendications 1 à 8, caracterisée par le fait que la surface d'élément raidisseur (23) présente une structire de surface rugueuse.

10. Plaque de friction selon l'une des revendications 1 à 8, caracterisée par le fait que la surface d'élément raidisseur (23) est munie d'un revêtement en métal, de préférence d'un revêtement en alliage d'aliminium êtant appliqué au pistolet.

11. Plaque de friction selon l'une des revendications 1 à 10, caracterisée par le fait d'une zone peu flexible perpendiculaire vers la surface frottante prévue dans la region centrale.

12. Plaque de friction selon la revendication 10, caracterisée par le fait que la flexibilité de la region centrale est realisée par une creux (27; 28; 29) dans l'élément de dos en forme de plaque (5).

13. Plaque de friction selon la revendication 10 ou 11, caracterisée par le fait que l'élément raidisseur (23) rigide est fenêtré dans la region centrale flaible.
